# FASCICULE DE BREVET EUROPEEN

(11) **EP 3 300 233 B1**
(45) Date de publication et mention de la délivrance du brevet: **11.05.2022**
(21) Numéro de dépôt: 17182115.0
(22) Date de dépôt: 19.07.2017
(51) Int. Cl.: H02K 29/08, H02K 11/215, B60S 1/08, G01R 15/20

(54) **MOTEUR ELECTRIQUE A COURANT CONTINU SANS BALAIS POUR SYSTEME D'ESSUYAGE DE VEHICULE AUTOMOBILE**
GLEICHSTROM-ELEKTROMOTOR OHNE WISCHBLÄTTER FÜR SCHEIBENREINIGUNGSSYSTEM EINES KRAFTFAHRZEUGS
BRUSHLESS DC ELECTRIC MOTOR FOR AUTOMOTIVE VEHICLE WIPER SYSTEM

(30) Priorité: 22.09.2016 FR 1658928
(43) Date de publication de la demande: 28.03.2018
(73) Titulaire: Valeo Systèmes d'Essuyage, 78322 Le Mesnil Saint Denis (FR)
(72) Inventeur: HERRADA, Jose-Luis, 78322 Le Mesnil Saint Denis (FR)
(74) Mandataire: Valeo Visibility

(56) Documents cités:
- EP-A1- 0 474 904
- EP-A1- 0 723 136
- EP-A2- 0 212 662
- DE-U1- 29 901 686
- DE-U1- 29 901 686
- JP-A- H0 634 390
- US-A- 4 319 188
- US-A1- 2015 002 001

## Description

L'invention a pour objet un moteur électrique à courant continu sans balais pour système d'essuyage de véhicule automobile.

Il est connu qu'un tel moteur électrique comporte principalement un rotor et un stator.

Généralement, le stator comprend une pluralité de bobines d'excitation électromagnétique du rotor tandis que le rotor comprend un aimant multipolaire, notamment un aimant comprenant deux pôles magnétiques opposés, nord et sud.

Le moteur électrique est configuré pour que, quand les bobines sont alimentées en courant électrique, un champ magnétique est créé, entrainant un mouvement de rotation de l'aimant multipolaire autour d'un axe de rotation.

Le moteur électrique est également pourvu d'un dispositif de détermination de position du rotor, ce qui permet d'assurer une commutation électronique de l'alimentation des bobines en fonction de l'angle du rotor, s'affranchissant de ce fait de la présence de balais.

L'installation du moteur électrique sans balais dans un système d'essuyage pour véhicule automobile nécessite de tenir compte de contraintes spatiales puisqu'il est souhaitable de réduire autant que possible l'encombrement du moteur électrique.

Or, pour réduire l'encombrement du moteur électrique, il serait pertinent de réduire la taille, notamment l'épaisseur, de l'aimant multipolaire.

Toutefois, quand le dispositif de détermination du rotor comprend plusieurs capteurs de position alignés, par exemple sur une carte de circuit imprimé, la taille de l'aimant multipolaire, notamment l'épaisseur, ne peut pas être diminuée du fait que, pour un aimant multipolaire étroit, les capteurs de position ne fonctionnent pas correctement et ne sont pas capables de détecter des transitions des pôles magnétiques de l'aimant de manière fiable.

Les documents US2015/002001 A1, DE29901686U1, EP0474904A1, EP0723136A1, EP0212662A1, JP H06 34390 A et US 4,319,188A illustrent un moteur électrique selon le préambule de la première revendication.

Le but de l'invention est de remédier au moins partiellement à cet inconvénient.

A cet effet, l'invention a pour objet un moteur électrique à courant continu sans balais pour système d'essuyage de véhicule automobile, comportant un stator et un rotor, le stator comprenant une pluralité de bobines d'excitation électromagnétique du rotor et le rotor comprenant un aimant multipolaire monté pour être animé d'un mouvement de rotation autour d'un axe de rotation et muni d'au moins trois couches axiales multipolaires, chaque couche axiale multipolaire se présentant sous la forme d'une couronne et ledit moteur électrique comprenant un arbre moteur qui traverse chaque couronne en son centre, deux couches extrémales étant disposées le long de l'axe de rotation de part et d'autre d'une couche centrale, le moteur électrique comprenant un dispositif de détermination de position du rotor, ledit dispositif de détermination de position du rotor comprenant au moins trois capteurs de position de l'une desdites au moins trois couches axiales multipolaires, chaque capteur de position étant associé respectivement à l'une des couches axiales multipolaires, le capteur associé à la couche centrale étant appelé capteur central et chaque capteur associé à l'une des couches extrémales étant appelé capteur extrémal, les capteurs de position étant installés dans un plan contenant une direction parallèle à l'axe de rotation de l'aimant multipolaire en étant alignés les uns relativement aux autres, le capteur central étant monté centré axialement relativement à la couche centrale.

Selon l'invention, au moins l'un des deux capteurs de position extrémaux est disposé décalé par rapport à la ligne axialement médiane de la couche extrémale associée.

Ainsi, grâce au décentrage d'un ou des capteurs extrémaux, il est possible de réduire la taille, notamment l'épaisseur, des couches axiales multipolaires de l'aimant multipolaire tout en assurant que chaque capteur ne soit sensible qu'aux transitions magnétiques de la couche à laquelle il est associé, garantissant de ce fait un bon niveau de précision de la commutation électronique dans l'alimentation des bobines.

Selon différentes caractéristiques de l'invention qui pourront être prises seules ou en combinaison :
- les deux capteurs extrémaux sont décentrés axialement relativement à la couche extrémale associée ;
- les couches axiales multipolaires sont d'une épaisseur identique ;
- la couche centrale présente une épaisseur supérieure aux épaisseurs des couches extrémales ;
- les deux couches extrémales sont d'une épaisseur identique ;
- les deux couches extrémales sont d'épaisseurs différentes ;
- le moteur électrique comprend une carte de circuit imprimé, les capteurs de position étant disposés sur ladite carte de circuit imprimé ;
- chaque couche axiale multipolaire comprend au moins une paire de pôles magnétiques nord et sud, de préférence trois paires de pôles nord et sud (soit six pôles magnétiques) ;
- les couches axiales multipolaires sont disposées de telle sorte qu'il existe un décalage angulaire entre les pôles nord et sud sur au moins deux couches axiales multipolaires successives, préférablement sur les trois couches axiales multipolaires successives ;
- l'aimant multipolaire, qui comprend les couches axiales multipolaires successives, est un élément monobloc ;
- les couches axiales multipolaires sont respectivement formées par magnétisation de tronçons de l'élément monobloc ;
- les couches axiales multipolaires sont chacune formée par une pièce rapportée ;
- les pièces rapportées formant les couches axiales multipolaires sont identiques et disposées le long de l'axe de rotation avec un décalage angulaire entre les pôles nord et sud sur au moins deux couches axiales multipolaires successives, préférablement sur les trois couches multipolaires successives ;
- les capteurs de position sont des capteurs à effet Hall.

L'invention a également pour objet un système d'essuyage pour véhicule automobile, comprenant un moteur électrique tel que décrit précédemment.

D'autres caractéristiques et avantages de l'invention apparaîtront à la lecture de la description qui va suivre. Celle-ci est purement illustrative et doit être lue en regard des dessins annexés sur lesquels :
- la figure 1 illustre une vue en perspective d'un moteur électrique selon la présente invention ;
- la figure 2 illustre une vue schématique d'une coupe longitudinale d'un détail de la figure 1 ; et
- la figure 3 illustre des exemples de positionnement de capteurs du moteur électrique de la figure 2.

### Moteur électrique

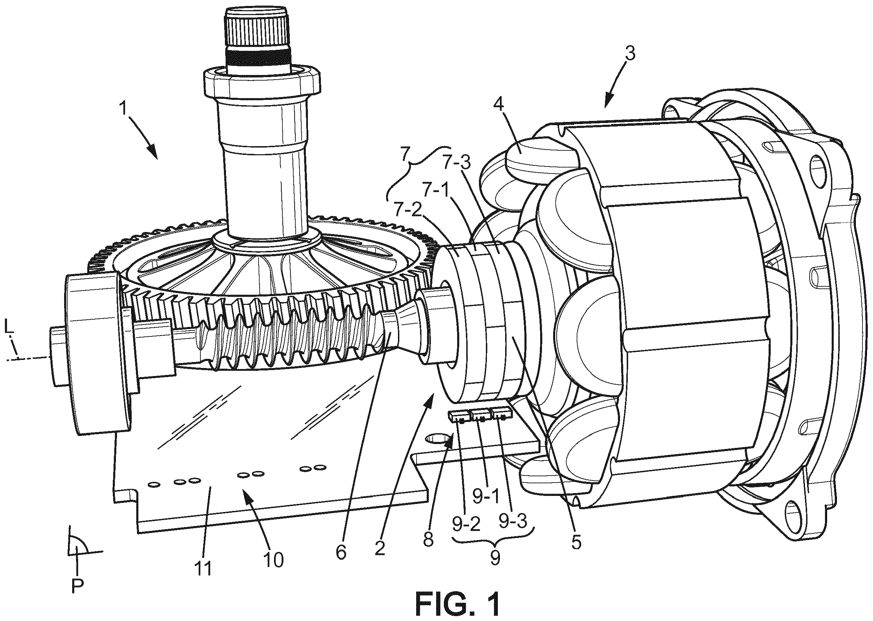

L'invention a pour objet un moteur électrique à courant continu sans balais pour système d'essuyage de véhicule automobile, référencé 1 dans la figure 1.

Comme visible sur la figure 1, le moteur électrique 1 comporte un rotor 2 et un stator 3.

Le stator 3 comprend une pluralité de bobines d'excitation électromagnétique 4 du rotor 2.

Le rotor 2 comprend un aimant multipolaire 5 monté pour être animé d'un mouvement de rotation autour d'un axe de rotation.

L'axe de rotation est appelé par la suite axe longitudinale, et référencé L.

Le moteur électrique 1 est configuré pour que le rotor 2 tourne dans le stator 3, ce qui entraine une rotation d'un arbre moteur 6 solidaire de l'aimant multipolaire 5.

L'arbre moteur 6 s'étend selon l'axe longitudinal L.

L'aimant multipolaire 5 est muni d'au moins trois couches axiales multipolaires 7.

Sur le mode de réalisation illustré, l'aimant multipolaire 5 comprend trois couches axiales multipolaires 7, référencées 7-1, 7-2 et 7-3.

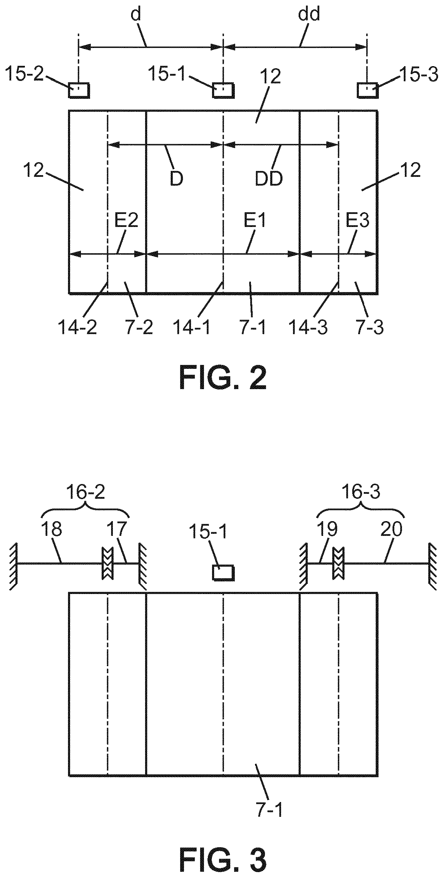

Comme visible sur les figures 1 et 2, chaque couche axiale multipolaire 7 se présente sous la forme d'une couronne.

Les couches 7 sont qualifiées de couches « axiales » car les couronnes sont disposées les unes à la suite des autres le long de l'axe longitudinal L.

Les couronnes 7 sont accolées les unes aux autres le long de l'axe longitudinal L. Alternativement, les couronnes 7 sont des parties d'un même élément monobloc.

Comme visible sur les figures, les couches axiales multipolaires 7 se succèdent le long de l'axe longitudinal L.

La couche axiale multipolaire centrale est référencée 7-1 tandis que deux couches multipolaires extrémales sont référencées 7-2 et 7-3.

Les deux couches multipolaires extrémales 7-2 et 7-3 sont disposées de part et d'autre de la couche axiale multipolaire centrale 7-1.

La juxtaposition des couronnes 7 réduit l'encombrement du moteur électrique 1.

L'arbre moteur 6 traverse les couronnes 7 en leur centre.

Chaque couche axiale multipolaire 7 est configurée pour tourner autour de l'axe longitudinal L.

Sur le mode de réalisation illustré, chaque couche axiale multipolaire 7 comprend six pôles, soit 3 paires de pôles nord et sud, disposés de façon alternée (nord, sud, nord,...). Chaque pôle occupe une étendue angulaire de 60° (soit 360° de la couche axiale / 6 pôles = 60°).

Les trois capteurs de position 9 sont répartis de manière à déterminer les six instants de commutation des bobines d'excitation électromagnétique du stator par rotation à 360°.

Les six étapes de commutation correspondent à une rotation de 360° électriques, c'est-à-dire une rotation complète de 360° du rotor dans le cas où l'aimant permanent comprend une seule paire de pôles. Dans le cas d'un aimant comprenant deux paires de pôles, les six étapes de commutation, correspondant à 360° électriques, correspondent à une rotation de 180° du rotor et dans le cas d'un aimant comprenant trois paires de pôles, les six étapes de commutation, correspondant à 360° électriques, correspondent à une rotation de 120° du rotor. Le passage d'une commutation à une autre est donc réalisé à chaque rotation d'un angle de 60° électriques de l'arbre moteur 6.

Les couches axiales multipolaires 7 sont en outre disposées de telle sorte qu'il existe un décalage angulaire entre les pôles d'un même type (nord et sud) sur au moins deux couches axiales multipolaires 7 successives, préférablement sur les trois couches axiales multipolaires 7 successives. Ce décalage angulaire entre les aimants de deux ou trois couches axiales multipolaires successives est fonction du nombre de paires de pôles des couches axiales multipolaires 7, et aussi fonction de la distance y référencée en figure 2 et décrite ci-dessous.

L'invention n'est toutefois pas limitée à une variante de réalisation dans laquelle chaque couche axiale 7 comprend six pôles. Les configurations à deux ou quatre pôles comme celles décrites précédemment, sont tout à fait possibles, de même que des configurations à plus de trois paires de pôles.

Comme visible sur la figure 1, le moteur électrique 1 comprend également un dispositif de détermination de position du rotor, référencé 8.

Le dispositif de détermination de position du rotor 8 comprend une pluralité de capteurs de position 9 de l'une des couches axiales multipolaires 7, chaque capteur de position 9 étant associé respectivement à l'une des couches axiales multipolaires 7.

De préférence, chaque capteur de position 9 est un capteur à effet Hall.

Comme visible sur les figures, un capteur à effet Hall référencé 9-1 est associé à la couche axiale multipolaire centrale 7-1, un capteur à effet Hall référencé 9-2 est associé à la couche axiale multipolaire extrémale 7-2 et un capteur à effet Hall référencé 9-3 est associé à la couche axiale multipolaire extrémale 7-3.

Les capteurs à effet Hall 9 sont installés dans un plan P contenant une direction parallèle à l'axe longitudinal L en étant alignés.

Comme visible sur les figures 1 et 2, le moteur électrique 1 comprend également une carte de circuit imprimé 10.

L'une des faces 11 de la carte de circuit imprimé 10 contient le plan P.

La face 11 est disposée en regard du rotor 2.

Les capteurs à effet Hall 9 sont disposés sur la face 11 de la carte de circuit imprimé 10.

### Position des capteurs à effet Hall

La position des capteurs à effet Hall 9 va maintenant être détaillée en relation principalement avec les figures 2 et 3.

Chaque capteur à effet Hall 9 est monté de sorte à détecter les transitions successives des pôles opposés pendant la rotation du rotor 2 dans le stator 3.

Comme visible sur la figure 2, chaque couronne 7 comprend une paroi longitudinale 12 qu'un plan de symétrie orthogonal à l'axe longitudinal L divise virtuellement en deux régions semblables.

Pour chaque couronne 7, le plan de symétrie comprend une ligne médiane 14 le long de la paroi longitudinale 12.

La ligne médiane de la couche axiale multipolaire 7-1 est référencée 14-1, la ligne médiane de la couche axiale multipolaire 7-2 est référencée 14-2 et la ligne médiane de la couche axiale multipolaire 7-3 est référencée 14-3.

Ainsi, un centre 15-1 du capteur à effet Hall 9-1 est disposé en regard de la ligne médiane 14-1 de la couche axiale multipolaire 7-1.

Autrement dit, le capteur à effet Hall central 9-1 est centré axialement relativement à la couche axiale multipolaire centrale 7-1.

Comme visible sur la figure 2, le capteur extrémal 9-2 est décentré axialement relativement à la couche axiale multipolaire extrémale 7-2.

En d'autres termes, un centre 15-2 du capteur extrémal 9-2 est décalé par rapport à la ligne médiane 14-2 de la couche axiale multipolaire 7-2.

De même, le capteur extrémal 9-3 est décentré axialement relativement à la couche axiale multipolaire extrémale 7-3.

En d'autres termes, un centre 15-3 du capteur extrémal 9-3 est décalé par rapport à la ligne médiane 14-3 de la couche axiale multipolaire 7-3.

Cette configuration permet de réduire une épaisseur des couches axiales multipolaires extrémales 7-2 et 7-3.

Ainsi, l'aimant multipolaire nécessite moins de matière et le moteur électrique 1 est court, ce qui diminue l'encombrement global du moteur électrique 1.

De préférence, comme illustré sur la figure 2, la distance d entre le centre 15-2 du capteur extrémal 9-2 et le centre 15-1 du capteur central 9-1 est supérieure à la distance D entre la ligne médiane 14-2 de la couche axiale multipolaire extrémale 9-2 et la ligne médiane 14-1 de la couche axiale multipolaire centrale 7-1.

En d'autres termes, les capteurs 9-1 et 9-2 sont plus éloignés l'un de l'autre qu'une position centrée du capteur 9-2 relativement à la ligne médiane 14-2.

Cet éloignement des capteurs 9-1 et 9-2 assure que le capteur extrémal 9-2 ne soit pas sensible aux transitions magnétiques de la couche axiale multipolaire centrale 7-1 même en cas d'épaisseur faible de la couche axiale multipolaire extrémale 7-2 et/ou de la couche axiale multipolaire centrale 7-1.

De manière analogue, la distance dd entre le centre 15-3 du capteur extrémal 9-3 et le centre 15-1 du capteur central 9-1 est supérieure à la distance DD entre la ligne médiane 14-3 de la couche axiale multipolaire extrémale 9-3 et la ligne médiane 14-1 de la couche axiale multipolaire centrale 7-1.

En d'autres termes, les capteurs 9-1 et 9-3 sont plus éloignés l'un de l'autre qu'une position centrée du capteur 9-3 relativement à la ligne médiane 14-3.

Cet éloignement des capteurs 9-1 et 9-3 assure que le capteur extrémal 9-3 ne soit pas sensible aux transitions magnétiques de la couche axiale multipolaire centrale 7-1 même en cas d'épaisseur faible de la couche axiale multipolaire extrémale 7-3 et/ou de la couche axiale multipolaire centrale 7-1.

Sur le mode de réalisation illustré, la couche axiale multipolaire centrale 7-1 présente une épaisseur, noté E1, supérieure aux épaisseurs des couches axiales multipolaires extrémales 7-2 et 7-3, notées respectivement E2 et E3.

Sur la figure 2, les deux couches 7-2 et 7-3 sont de même épaisseur.

Selon une variante non illustrée, les deux couches extrémales 7-2, 7-3 sont d'épaisseurs différentes.

Selon un mode de réalisation non illustré, les couches axiales multipolaires 7-1 à 7-3 sont d'une épaisseur identique.

En référence à la figure 3, on constate que le capteur extrémal 9-2 est disposé de préférence dans une zone 16-2 décentrée axialement, c'est-à-dire relativement à la ligne médiane 14-2.

La zone 16-2 est constituée par deux régions 17 et 18.

La première région 17 est disposée à partir d'une position faisant face à la ligne médiane 14-2, à l'exclusion de celle-ci, vers la couche axiale multipolaire 7-1.

La région 18 est disposée à partir de la ligne médiane 14-2, à l'exclusion de celle-ci, vers une extrémité de la couche axiale multipolaire 7-2 opposée à la couche axiale multipolaire 7-1.

Dans la région 17, le capteur extrémal 9-2 est disposé de préférence à une distance du centre 15-2 comprise dans une plage de valeurs : ]0, 38%]*E*2.

Alternativement, dans la région 18, le capteur extrémal 9-2 est disposé de préférence à une distance du centre 15-2 comprise dans une plage de valeurs : ]0, 63%]*E*2.

On constate que pour des valeurs de distance supérieures à 50%E2, le capteur est disposé non pas en regard de la couche axiale multipolaire 9-2 mais est au contraire décalé vers l'extérieur de l'aimant multipolaire 5.

Quand le capteur extrémal 9-2 est disposé dans la région 17, l'épaisseur E2 de la couche axiale multipolaire extrémale 7-2 peut être choisie particulièrement faible.

Quand le capteur extrémal 9-2 est disposé dans la région 18, l'épaisseur E1 de la couche axiale multipolaire centrale 7-1 peut être choisie particulièrement faible.

La zone 16-3 est constituée par deux régions 19 et 20.

La première région 19 est disposée à partir la ligne médiane 14-3, à l'exclusion de celle-ci, vers la couche axiale multipolaire 7-1.

La région 20 est disposée à partir d'une position faisant face à la ligne médiane 14-3, à l'exclusion de celle-ci, vers une extrémité de la couche axiale multipolaire 7-3 opposée à la couche axiale multipolaire 7-1.

Dans la région 19, le capteur extrémal 9-3 est disposé à une distance du centre 15-3 comprise dans une plage de valeurs : ]0, 38%]*E*3.

Alternativement, dans la région 20, le capteur extrémal 9-3 est disposé à une distance du centre 15-3 comprise dans une plage de valeurs : ]0, 63%]*E*3.

On constate que pour des valeurs de distance supérieures à 50%E3, le capteur est disposé non pas en regard de la couche axiale multipolaire 9-3 mais est au contraire décalé vers l'extérieur de l'aimant multipolaire 5.

Par exemple, l'épaisseur E3 est de l'ordre de quelques millimètres, de préférence entre 3 mm et 10 mm, avantageusement de 4 mm.

Quand le capteur extrémal 9-3 est disposé dans la région 19, l'épaisseur E3 de la couche axiale multipolaire extrémale 7-3 peut être choisie particulièrement faible.

Quand le capteur extrémal 9-3 est disposé dans la région 20, l'épaisseur E1 de la couche axiale multipolaire centrale 7-1 peut être choisie particulièrement faible.

### Avantages

Grâce à la configuration selon la présente invention, il est possible de réduire la taille, notamment l'épaisseur, des couches axiales multipolaires de l'aimant multipolaire tout en assurant le suivi de la position de chacune des couches.

En particulier, les couches extrémales sont avantageusement d'épaisseurs plus faibles, ce qui réduit l'encombrement global du moteur électrique.

On note que l'invention a été présentée dans un mode de réalisation où les deux capteurs 9-2 et 9-3 sont décentrés.

Bien entendu, l'invention ne se limite pas à ce mode de réalisation.

Il est possible que seul l'un ou l'autre des capteurs 9-2 et 9-3 soit décentré.

## Revendications

1. Moteur électrique à courant continu sans balais pour système d'essuyage de véhicule automobile, comportant un stator (3) et un rotor (2), le stator (3) comprenant une pluralité de bobines d'excitation électromagnétique (4) du rotor (2) et le rotor (2) comprenant un aimant multipolaire (5) monté pour être animé d'un mouvement de rotation autour d'un axe de rotation (L) et muni d'au moins trois couches axiales multipolaires, chaque couche axiale multipolaire (7-1, 7-2, 7-3) se présentant sou s la forme d'une couronne, ledit moteur électrique comprenant un arbre moteur (6) qui traverse chaque couronne en son centre, deux couches extrémales (7-2, 7-3) étant disposées le long de l'axe de rotation (L) de part et d'autre d'une couche centrale (7-1), le moteur électrique (1) comprenant un dispositif de détermination de position du rotor (8), ledit dispositif de détermination de position du rotor (8) comprenant au moins trois capteurs de position (9) de l'une desdites au moins trois couches axiales multipolaires (7), chaque capteur de position (9) étant associé respectivement à l'une des couches axiales multipolaires (7), chaque capteur (9) étant situé dans le prolongement radial de la couche axiale multipolaire (7-1, 7-2, 7-3) qui lui est respectivement associé, le capteur (9-1) associé à la couche centrale (7-1) étant appelé capteur central (9-1) et chaque capteur (9-2, 9-3) associé à l'une des couches extrémales étant appelé capteur extrémal, les capteurs de position (9) étant installés dans un plan (P) contenant une direction parallèle à l'axe de rotation de l'aimant multipolaire (5) en étant alignés les uns relativement aux autres, un centre (15-1) du capteur central (9-1) étant disposé en regard de la ligne axialement médiane (14-1) de la couche centrale (7-1), **caractérisé en ce qu'**un centre (15-2, 15-3) d'au moins l'un des deux capteurs de position extrémaux (9-2, 9-3) est disposé décalé par rapport à la ligne axialement médiane (14-2, 14-3) de la couche extrémale associée (7-2, 7-3).

2. Moteur électrique selon la revendication 1, dans lequel les deux capteurs extrémaux (9-2, 9-3) sont décentrés axialement relativement à la couche extrémale associée (7-2, 7-3).

3. Moteur électrique selon l'une quelconque des revendications 1 et 2, dans lequel les couches axiales multipolaires (7-1, 7-2, 7-3) sont d'une épaisseur identique.

4. Moteur électrique selon l'une quelconque des revendications 1 et 2, dans lequel la couche centrale (7-1) présente une épaisseur supérieure aux épaisseurs des couches axiales extrémales (7-2, 7-3).

5. Moteur électrique selon la revendication précédente, dans lequel les deux couches extrémales (7-2, 7-3) sont d'une épaisseur identique.

6. Moteur électrique selon la revendication 4, dans lequel les deux couches extrémales (7-2, 7-3) sont d'épaisseurs différentes.

7. Moteur électrique selon l'une quelconque des revendications précédentes, comprenant une carte de circuit imprimé (10), les capteurs de position (9) étant disposés sur ladite carte de circuit imprimé (10).

8. Moteur électrique selon l'une quelconque des revendications précédentes, dans lequel chaque couche axiale multipolaire (7) comprend au moins une paire de pôles magnétiques nord et sud, de préférence trois paires de pôles nord et sud.

9. Moteur électrique selon la revendication précédente, dans lequel les couches axiales multipolaires (7) sont disposées le long de l'axe de rotation (L) de telle sorte qu'il existe un décalage angulaire entre les pôles nord et sud sur au moins deux couches axiales multipolaires (7) successives, préférablement sur les trois couches axiales multipolaires successives.

10. Moteur électrique selon l'une quelconque des revendications précédentes, dans lequel l'aimant multipolaire (5), qui comprend les couches axiales multipolaires (7) successives, est un élément monobloc.

11. Moteur électrique selon la revendication précédente, dans lequel les couches axiales multipolaires (7) sont respectivement formées par magnétisation de tronçons de l'élément monobloc.

12. Moteur électrique selon l'une quelconque des revendications 1 à 9 en combinaison avec la revendication 8, dans lequel les couches axiales multipolaires (7) sont chacune formée par une pièce rapportée.

13. Moteur électrique selon la revendication précédente, dans lequel les pièces rapportées formant les couches axiales multipolaires (7) sont identiques et disposées le long de l'axe de rotation (L) avec un décalage angulaire entre les pôles nord et sud sur au moins deux couches axiales multipolaires (7) successives, préférablement sur les trois couches axiales multipolaires successives.

14. Moteur électrique selon l'une quelconque des revendications précédentes, dans lequel les capteurs de position sont des capteurs à effet Hall.

## Patentansprüche

1. Bürstenloser Gleichstrom-Elektromotor für ein Wischersystem eines Kraftfahrzeugs, der einen Stator (3) und einen Rotor (2) aufweist, wobei der Stator (3) eine Vielzahl von elektromagnetischen Erregerspulen (4) des Rotors (2) enthält, und der Rotor (2) einen mehrpoligen Magnet (5) enthält, der montiert wird, um in eine Drehbewegung um eine Drehachse (L) angeregt zu werden und mit mindestens drei mehrpoligen axialen Schichten versehen ist, wobei jede mehrpolige axiale Schicht (7-1, 7-2, 7-3) in Form eines Kranzes vorliegt, wobei der Elektromotor eine Antriebswelle (6) enthält, die jeden Kranz in seiner Mitte durchquert, wobei zwei äußere Schichten (7-2, 7-3) entlang der Drehachse (L) zu beiden Seiten einer mittleren Schicht (7-1) angeordnet sind, wobei der Elektromotor (1) eine Vorrichtung zur Positionsbestimmung des Rotors (8) enthält, wobei die Vorrichtung zur Positionsbestimmung des Rotors (8) mindestens drei Positionssensoren (9) der einen der mindestens drei mehrpoligen axialen Schichten (7) enthält, wobei jeder Positionssensor (9) einer der mehrpoligen axialen Schichten (7) zugeordnet ist, wobei jeder Sensor (9) sich in der radialen Verlängerung der mehrpoligen axialen Schicht (7-1, 7-2, 7-3) befindet, die ihm zugeordnet ist, wobei der der mittleren Schicht (7-1) zugeordnete Sensor (9-1) mittlerer Sensor (9-1) genannt wird, und jeder einer der äußeren Schichten zugeordnete Sensor (9-2, 9-3) äußerer Sensor genannt wird, wobei die Positionssensoren (9) in einer Ebene (P) eingebaut sind, die eine Richtung parallel zur Drehachse des mehrpoligen Magneten (5) enthält, indem sie zueinander ausgerichtet sind, wobei eine Mitte (15-1) des mittleren Sensors (9-1) gegenüber der axial mittleren Linie (14-1) der mittleren Schicht (7-1) angeordnet ist, **dadurch gekennzeichnet, dass** eine Mitte (15-2, 15-3) mindestens eines der zwei äußeren Positionssensoren (9-2, 9-3) bezüglich der axial medianen Linie (14-2, 14-3) der zugeordneten äußeren Schicht (7-2, 7-3) versetzt angeordnet ist.

2. Elektromotor nach Anspruch 1, wobei die zwei äußeren Sensoren (9-2, 9-3) bezüglich der zugeordneten äußeren Schicht (7-2, 7-3) axial außermittig sind.

3. Elektromotor nach einem der Ansprüche 1 und 2, wobei die mehrpoligen axialen Schichten (7-1, 7-2, 7-3) die gleiche Dicke haben.

4. Elektromotor nach einem der Ansprüche 1 und 2, wobei die mittlere Schicht (7-1) eine größere Dicke hat als die Dicken der äußeren axialen Schichten (7-2, 7-3).

5. Elektromotor nach dem vorhergehenden Anspruch, wobei die zwei äußeren Schichten (7-2, 7-3) die gleiche Dicke haben.

6. Elektromotor nach Anspruch 4, wobei die zwei äußeren Schichten (7-2, 7-3) unterschiedliche Dicken haben.

7. Elektromotor nach einem der vorhergehenden Ansprüche, der einer Leiterplatte (10) enthält, wobei die Positionssensoren (9) auf der Leiterplatte (10) angeordnet sind.

8. Elektromotor nach einem der vorhergehenden Ansprüche, wobei jede mehrpolige axiale Schicht (7) mindestens ein Paar von Nord- und Süd-Magnetpolen enthält, vorzugsweise drei Paare von Nord- und Südpolen.

9. Elektromotor nach dem vorhergehenden Anspruch, wobei die mehrpoligen axialen Schichten (7) so entlang der Drehachse (L) angeordnet sind, dass es einen Winkelversatz zwischen den Nord- und Südpolen auf mindestens zwei aufeinanderfolgenden mehrpoligen axialen Schichten (7) gibt, vorzugsweise auf den drei aufeinanderfolgenden mehrpoligen axialen Schichten.

10. Elektromotor nach einem der vorhergehenden Ansprüche, wobei der mehrpolige Magnet (5), der die aufeinanderfolgenden mehrpoligen axialen Schichten (7) enthält, ein einstückiges Element ist.

11. Elektromotor nach dem vorhergehenden Anspruch, wobei die mehrpoligen axialen Schichten (7) je durch Magnetisierung von Abschnitten des einstückigen Elements gebildet werden.

12. Elektromotor nach einem der Ansprüche 1 bis 9 in Kombination mit Anspruch 8, wobei die mehrpoligen axialen Schichten (7) je von einem angebauten Bauteil gebildet werden.

13. Elektromotor nach dem vorhergehenden Anspruch, wobei die die mehrpoligen axialen Schichten (7) bildenden angebauten Bauteile gleich und entlang der Drehachse (L) mit einem Winkelversatz zwischen den Nord- und Südpolen auf mindestens zwei aufeinanderfolgenden mehrpoligen axialen Schichten (7) angeordnet sind, vorzugsweise auf den drei aufeinanderfolgenden mehrpoligen axialen Schichten.

14. Elektromotor nach einem der vorhergehenden Ansprüche, wobei die Positionssensoren Hall-Sensoren sind.

## Claims

1. Brushless DC electric motor for a wiper system of an automotive vehicle, including a stator (3) and a rotor (2), the stator (3) comprising a plurality of coils (4) for electromagnetically exciting the rotor (2) and the rotor (2) comprising a multipole magnet (5) that is mounted so as to be driven in rotation about an axis of rotation (L) and provided with at least three multipole axial layers, each multipole axial layer (7) taking the form of a crown, said electric motor comprising a motor shaft (6) which passes through the centre of each crown, two extremal layers (7-2, 7-3) being positioned along the axis of rotation (L) on either side of a central layer (7-1), the electric motor (1) comprising a device (8) for determining the position of the rotor, said device (8) for determining the position of the rotor comprising at least three position sensors (9) for detecting the position of one of said at least three multipole axial layers (7), each position sensor (9) being associated, respectively, with one of said multipole axial layers (7), each sensor (9) being situated in the radial extension of the respectively associated multipole axial layer (7-1, 7-2, 7-3), the sensor (9-1) associated with the central layer (7-1) being referred to as the central sensor (9-1) and each sensor (9-2, 9-3) associated with one of the extremal layers being referred to as an extremal sensor, the position sensors (9) being installed in a plane (P) containing a direction that is parallel to the axis of rotation of the multipole magnet (5) while being aligned relative to one another, a centre (15-1) of the central sensor (9-1) being positioned facing the medial line 14-1 of the central layer (7-1), **characterized in that** a centre (15-2, 15-3) of at least one of the two extremal position sensors (9-2, 9-3) is offset with respect to the medial line (14-2, 14-3) of the associated extremal layer (7-2, 7-3).

2. Electric motor according to Claim 1, in which the two extremal sensors (9-2, 9-3) are axially off-centred relative to the associated extremal layer (7-2, 7-3).

3. Electric motor according to either of Claims 1 and 2, in which the thicknesses of the multipole axial layers (7-1, 7-2, 7-3) are identical.

4. Electric motor according to either of Claims 1 and 2, in which the thickness of the central layer (7-1) is higher than the thicknesses of the extremal axial layers (7-2, 7-3).

5. Electric motor according to the preceding claim, in which the thicknesses of the two extremal layers (7-2, 7-3) are identical.

6. Electric motor according to Claim 4, in which the thicknesses of the two extremal layers (7-2, 7-3) are different.

7. Electric motor according to any one of the preceding claims, comprising a printed circuit board (10), the position sensors (9) being positioned on said printed circuit board (10).

8. Electric motor according to any one of the preceding claims, in which each multipole axial layer (7) comprises at least one pair of north and south magnetic poles, preferably three pairs of north and south poles.

9. Electric motor according to the preceding claim, in which the multipole axial layers (7) are positioned along the axis of rotation (L) such that there is an angular offset between the north and south poles on at least two successive multipole axial layers (7), preferably on three successive multipole axial layers.

10. Electric motor according to any one of the preceding claims, in which the multipole magnet (5), which comprises the successive multipole axial layers (7), is an element formed as a single piece.

11. Electric motor according to the preceding claim, in which the multipole axial layers (7) are formed by magnetizing respective segments of the element formed as a single piece.

12. Electric motor according to any one of Claims 1 to 9 in combination with Claim 8, in which the multipole axial layers (7) are each formed by an added part.

13. Electric motor according to the preceding claim, in which the added parts forming the multipole axial layers (7) are identical and positioned along the axis of rotation (L) with an angular offset between the north and south poles on at least two successive multipole axial layers (7), preferably on three successive multipole axial layers.

14. Electric motor according to any one of the preceding claims, in which the position sensors are Hall effect sensors.
